(19) Europäisches Patentamt / European Patent Office / Office européen des brevets

(11) **EP 2 992 582 B1**

(12) **EUROPEAN PATENT SPECIFICATION**

(45) Date of publication and mention
of the grant of the patent:
**31.01.2018 Bulletin 2018/05**

(21) Application number: **14726513.6**

(22) Date of filing: **28.04.2014**

(51) Int Cl.:
*H02J 3/32* *(2006.01)*  *H02J 3/38* *(2006.01)*
*H02J 7/00* *(2006.01)*  *H02J 7/34* *(2006.01)*

(86) International application number:
**PCT/EP2014/001125**

(87) International publication number:
**WO 2014/177264 (06.11.2014 Gazette 2014/45)**

(54) **APPARATUS AND METHOD FOR MANAGING STORED ENERGY**

GERÄT UND VERFAHREN ZUR STEUERUNG VON GESPEICHERTER ENERGIE

APPAREIL ET PROCÉDÉ DE GESTION D'ÉNERGIE STOCKÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2013 GB 201307651
29.04.2013 GB 201307712
04.03.2014 GB 201403833**

(43) Date of publication of application:
**09.03.2016 Bulletin 2016/10**

(73) Proprietor: **Level Energy Ltd
Cheltenham GL53 7TH (GB)**

(72) Inventor: **HOWE, Andrew Robert Linton
Meopham DA13 ODP (GB)**

(74) Representative: **Norris, Timothy Sweyn
Basck
16 Saxon Road
Cambridge CB5 8HS (GB)**

(56) References cited:
**EP-A1- 2 139 090**    **CN-A- 102 891 495**
**US-A1- 2010 090 532**

- **LI GUO ET AL: "A new battery energy storage
system control method based on SOC and
variable filter time constant", INNOVATIVE
SMART GRID TECHNOLOGIES (ISGT), 2012 IEEE
PES, IEEE, 16 January 2012 (2012-01-16), pages
1-7, XP032153689, DOI:
10.1109/ISGT.2012.6175627 ISBN:
978-1-4577-2158-8**
- **MARGUERITE TOUMA HOLMBERG ET AL: "SVC
LightÂ TM with energy storage for frequency
regulation", INNOVATIVE TECHNOLOGIES FOR
AN EFFICIENT AND RELIABLE ELECTRICITY
SUPPLY (CITRES), 2010 IEEE CONFERENCE ON,
IEEE, PISCATAWAY, NJ, USA, 27 September 2010
(2010-09-27), pages 317-324, XP031788451, ISBN:
978-1-4244-6076-2**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present disclosure relates to apparatus for correcting or managing net energy, for example to apparatus for correcting or managing net energy stored in energy storage devices, for example accumulators, when providing in operation stabilization of electrical supply grids. Moreover, the present disclosure relates to methods of correcting or managing net energy, for example to methods of correcting or managing net energy stored in energy storage devices, for example accumulators, when providing in operation stabilization of electrical supply grids. The present disclosure also relates to apparatus for addressing battery dead-band, for example when providing in operation stabilization of electrical supply grids. Moreover, the present disclosure relates to methods of addressing battery dead-band, for example when providing in operation stabilization of electrical supply grids. Furthermore, the present disclosure relates to software products stored on non-transitory (non-transient) machine-readable data storage carrier and executable upon computing hardware for implementing aforesaid methods.

### Background

Electrical supply networks, also known as *"grids"*, are employed to provide power connections from one or more generators to one or more consumers. Power consumed by the one or more consumers corresponds to a power demand placed upon the one or more generators via the networks. In order to keep operation of the networks stable, it is desirable that there is a balance between power generated by the one or more generators and the power demand. However, both the power demand and the power generated are susceptible to fluctuating as a function of time. For example, the one or more generators include one or more renewable energy sources, for example tidal power and/or wind power for wind turbines. Moreover, the power demand includes one or more users connecting up their electrical vehicles at an end of a working day to recharge their batteries, for example in a situation of plug-in hybrid vehicles.

In order to address the aforementioned situation, it is known to employ smart-grid techniques, for example involving controlling the power demand to match available power generated, for example by selectively switching on and/or switching off various user electrical loads so as to maintain the balance between power generated and power demand. Moreover, it is known to employ energy storage devices coupled to the electrical supply network both to absorb energy when there is excess power generated, and also to release energy when the power generated by the one or more generators is insufficient to meet the power demand. When the energy storage devices are accumulators, for example coupled to the electric supply networks by way of interfacing electronic switching converters, there is a problem with electrical supply network noise, for example in respecting of its alternating synchronous frequency of operation, namely nominally 60 Hz for the USA, and nominally 50 Hz for Europe. When the one or more accumulators are charged or discharged on a basis of the synchronous operating frequency of the electrical supply network, which can deviate from the nominal frequency depending upon instantaneous balance of the electrical supply grid, maintaining a satisfactory battery condition, namely state-of-charge or discharge (SOC), can be a problem, especially when there is considerable aforementioned electrical noise present on the electrical supply networks as power demand fluctuates as a function of time and/or power generated fluctuates as a function of time.

In the UK, National Grid maintains frequency regulation by contracting for frequency regulation services from suppliers. The services provided are concerned with varying energy supplied depending on grid frequency. The services are bi-directional, in that the suppliers can provide both high-response, namely a consumption of net energy, and a low-response response, namely a generation of net energy. Generators provide response power, wherein the power provided varies with frequency, with a defined droop characteristic; this is a normal response. There is an associated characteristic which provides a linear relationship between grid frequency and delivered power, such that in the UK, a generator consumes full response power at 50.5Hz and delivers full response power at 49.5Hz. This can be represented by Equation 1 (Eq. 1) within a range of grid frequencies (f) defined by 49.5Hz < f < 50.5Hz:

$$P_{response}(f) = -\frac{(f - 50\text{Hz})}{0.5\text{Hz}}.\text{Full\_power} \qquad \text{Eq. 1}$$

Battery energy storage is able to provide a frequency responsive service. A given battery energy storage is capable of providing both high-responses and low-responses. However, the given battery energy storage can only operate within defined energy storage limits. By way of modifying a response characteristic depending on the state-of-charge SOC) of the given battery energy storage, a smaller battery can be used to provide useful response.

In a technical publication *"SVC Light® with Energy Storage for frequency regulation"* (authors: Holmberg, Lahtinen, McDowall and Larsson)(IEEE 2010), there is described an apparatus for controlling active and reactive power at a point of connection to an electrical power grid. The apparatus includes a state-of-charge (SOC) control loop to keep an average SOC level of a battery arrangement to around 50%. The control loop is operable to charge or discharge the battery arrangement when the apparatus is operating within its deadband.

The above prior art is reflected by the preamble of claims 1 and 8.

## Summary

The present disclosure seeks to provide an improved apparatus for correcting or managing stored energy, for example when providing a frequency response service to electrical power networks.

Moreover, the present disclosure seeks to provide an improved method of correcting or managing stored energy, for example when providing a frequency response service to electrical power networks.

According to a first aspect, there is provided an apparatus for correcting net energy when providing a load balancing service to an electrical power supply network, wherein the load balancing service includes one or more energy storage devices which are charged and/or discharged from energy supplied from and/or to the electrical power supply network respectively, characterised in that the apparatus associated with the one or more energy storage devices is operable to apply a bias in the form of a modified response energy versus frequency characteristic to high-excursions and/or low-excursions of the load balancing service to control a state-of-charge (SOC) of the one or more energy storage devices, wherein the bias is a function of an operating frequency (f) of the electrical power supply network and the state-of-charge (SOC) of the one or more energy storage devices, for ensuring that the one or more energy storage devices are maintained at a nominal charge ($S_{nom}$).

The invention is of advantage in that energy storage capacity of the one or more energy storage devices is employed more effectively for providing a response service.

Optionally, the apparatus, for ensuring that the one or more energy storage devices are maintained at a nominal charge ($S_{nom}$), operates in regions that are advantageous to a battery storage device chemistry of the one or more energy storage devices.

Optionally, in the apparatus, the energy storage devices include at least one of: sealed Lead acid batteries, lithium-based batteries, inertial flywheel energy storage devices, supercapacitors, air batteries.

Optionally, in the apparatus, load balancing service provides a response that is modified as a function of the measured state-of-charge (SOC). More optionally, in the apparatus, the response is a piecewise linear function of the operating frequency (f) of the electrical power supply network. More optionally, in the apparatus, the allowable operating region in frequency response wherein the bias can extend is defined as piecewise linear functions of the operating frequency (f) of the electrical power supply network.

Optionally, in the apparatus, a value of maximum high and low excursion bias to the response is specified.

According to a second aspect, there is provided a method of using an apparatus for correcting net energy when providing a load balancing service to an electrical power supply network, wherein the load balancing service includes one or more energy storage devices which are charged and/or discharged from energy supplied from and/or to the electrical power supply network respectively, characterized in that the method includes operating the apparatus associated with the one or more energy storage devices to apply a in the form of a modified response energy versus frequency characteristic to high-excursions and/or low-excursions of the load balancing service to control a state-of-charge (SOC) of the one or more energy storage devices, wherein the bias is a function of an operating frequency of the electrical power supply network and the state-of-charge (SOC) of the one or more energy storage devices, for ensuring that the one or more energy storage devices are maintained at nominal charge ($S_{nom}$).

Optionally, the method includes, for ensuring that the one or more energy storage devices are maintained at nominal charge ($S_{nom}$), operating in regions that are advantageous to a battery storage device chemistry of the one or more energy storage devices.

Optionally, the method includes arranging for the one or more energy storage devices to include at least one of: sealed Lead acid batteries, lithium-based batteries, inertial flywheel energy storage devices, supercapacitors, air batteries.

Optionally, the method includes arranging for the load balancing service to provide a response that is modified as a function of the measured state-of-charge (SOC). More optionally, in the method, the allowable operating region in frequency response wherein the bias can extend is defined as piecewise linear functions of the operating frequency (f) of the electrical power supply network (30).

Optionally, the method includes operating the load balancing service to exhibit a deadband in its response around a nominal operating frequency (f) of the electrical power supply network.

Optionally, the method includes specifying a value of maximum high and low excursion bias to the response.

According to a third aspect, there is provided a software product recording on machine-readable data storage media, characterized in that the software product is executable upon computing hardware for implementing a method of the second aspect.

According to a fourth aspect, there is provided an electrical power supply network including an apparatus of the first aspect, for providing in operation a response service to the electrical power supply network.

It will be appreciated that features of the invention are susceptible to being combined in various combinations without departing from the scope of the invention as defined by the appended claims.

Description of the diagrams

Embodiments of the present disclosure will now be described, by way of example only, with reference to following drawings, wherein:

FIG. 1     is an illustration of an electrical supply system including an electrical supply network, one or more generators, one or more power consumers and a load balancing apparatus including one or more accumulators for receiving and/or supply energy to the electrical supply network to assist to load balance the electrical supply network;

FIG. 2     is an illustration of a load balancing response from the load balancing apparatus in FIG. 1; and

FIG. 3     is an illustration of an alternative load balancing response from the load balancing apparatus in FIG. 1.

FIG. 4     is an illustration of a response power delivered from a typical generator which is connected to the grid and providing frequency response; in the illustration, a characteristic 1 is ideally a linear relationship, wherein a delivered power varies with frequency; in the UK, there is provided a nominal grid frequency is 50.000 Hz and the ideal characteristic is zero response power; in the example shown, 6 MW of low response is delivered at 49.5 Hz and 6 MW of high response is delivered at 50.5 Hz;

FIG. 5     is an illustration of a variation of grid frequency as a function of time **2,** over a period of 100 days, namely commencing 17th June 2013; a frequency history **3** is an expanded portion of the characteristic **1,** over a magnified scale of 6 hours;

FIG. 6     is a histogram of the response power delivered by an ideal generator with the frequency characteristic **1,** when subject to the frequency history, **2;** the histogram has a y-axis which depicts a log scale, and in total there are 0.57 million data points corresponding to a 15 second resolution;

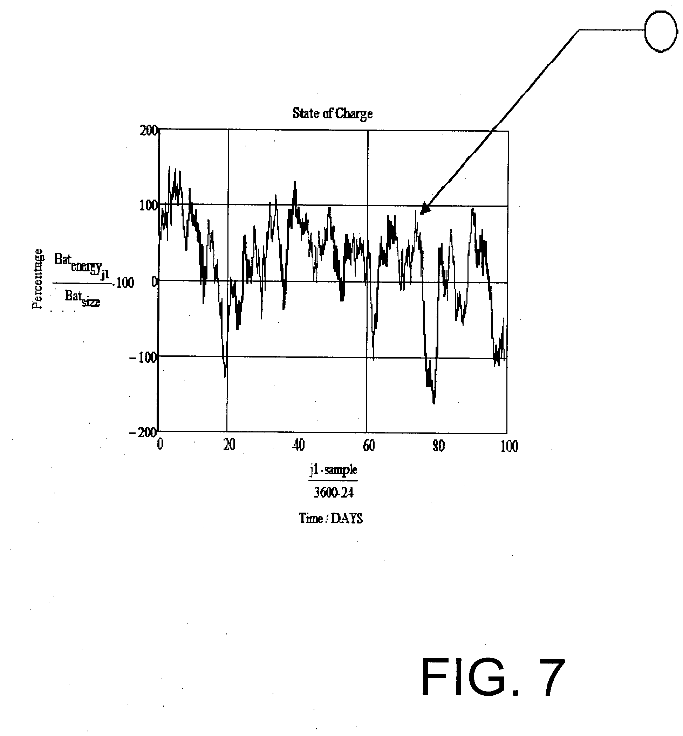

FIG. 7     is an illustration of a state-of-charge (SOC) of an accumulator with a storage capacity of 5.5MWh, when providing the response power defined by the characteristic **1,** with respect to grid frequency, **2;** The battery starts from a SOC which is nominally 50% of its capacity; in such a modelled scenario, it will be appreciated that the capacity of the battery is exceeded with SOC ranging from -160% to 149%; more practically, an 18 MWh battery an be potentially used without exceeding its full SOC range; however, this larger capacity battery will be more than three times as expensive in contradistinction to other solutions described in the disclosure;

FIG. 8     is an illustration of a SOC biasing function, **6,** whose characteristic is set by three constants $k_1$, $k_2$ and $k_3$;

FIG. 9     is an illustration of several modified response power as a function of frequency characteristics, **7, 8, 9, 10** and **11** which are applied depending on the SOC biasing function, **6;**

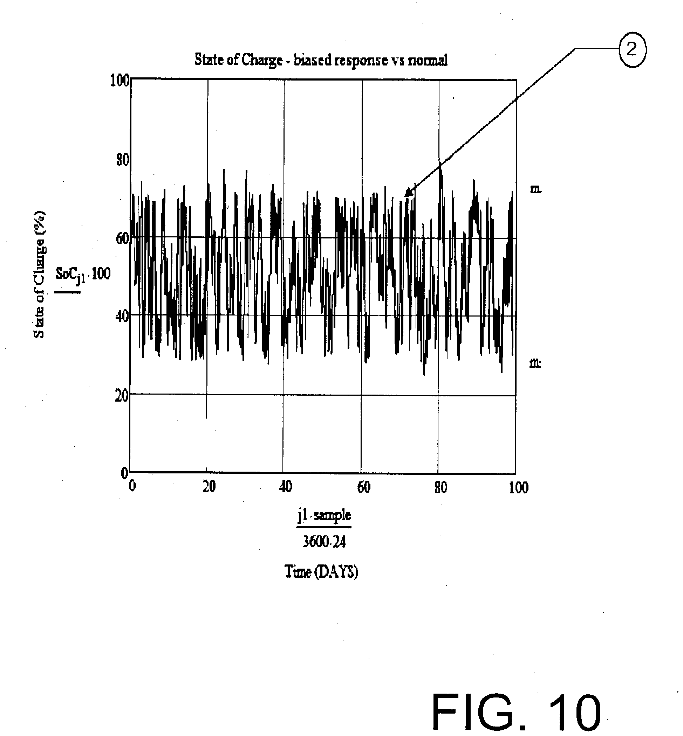

FIG. 10    is an illustration the battery state-of-charge (SOC) for a 5.5 MWh battery, when the frequency history, **2,** is applied to modified response characteristics selected based on the current battery state-of-charge; the state-of-charge variation is substantially improved, and an associated response system can operate with a 5.5MWh battery, while retaining sufficient energy storage to respond to a potential grid fault condition, such as a generator failure, which may potentially cause the grid frequency to drop or increase, requiring full delivery of response power for the duration of the fault condition;

FIG. 11    is a histogram **13,** of response power delivered for the biased modified response characteristics; it will be appreciated that the total response energy is substantially the same, namely an advantageous characteristic; and

FIG. 12    is a histogram, alternatively a probability distribution function graph, of the battery state-of-charge that is experienced when applying the same grid frequency history, **2,** to the biased modified response characteristics, namely as illustrated in a histogram **14,** when compared to the normal generator response characteristic as illustrated in a histogram **15;** the vastly reduced state of charge range, and hence size of battery, is clearly demonstrated here.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

**Description of embodiments of the disclosure**

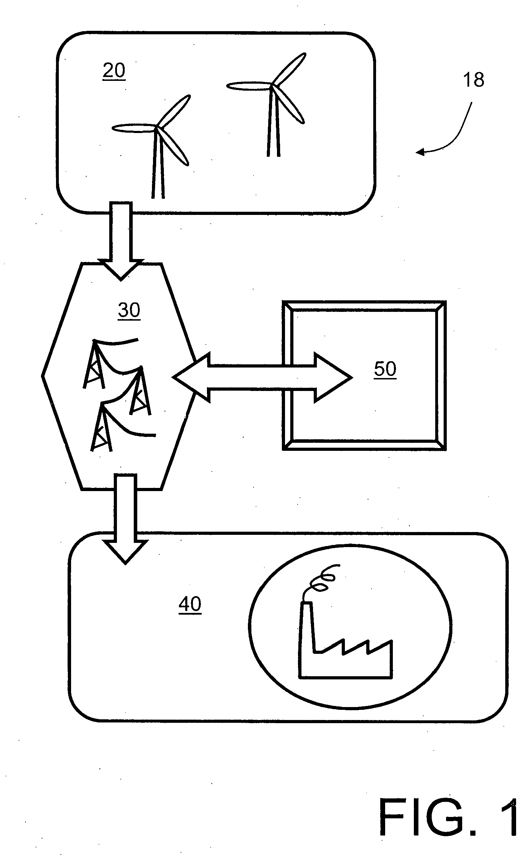

In overview, with reference to FIG. 1, an electrical supply system, indicated generally by **18,** includes one or more power generators **20,** an electrical supply network **30,** and one or more consumers **40.** The one or more power generators **20** include, for example, one or more of: coal-fired power stations, wind turbines, geothermal energy generators, solar cells, gas turbine generators, nuclear power plant, ocean wave energy generating plant, ocean thermal energy generators. The one or more consumers **40** include factories, hospitals, schools, domestic premises, transport systems, but not limited thereto. The electrical supply network **30** includes overhead gantry pylons, grounds cables, switching stations, transformers and such like.

It is conventional practice to operate the electrical supply system **18** with an alternating current (a.c.) form of electricity, which is usually at a nominal operating frequency $f_0$ of 60 Hz for USA, and 50 Hz for Europe. In operation, an operator of the electrical supply system **18** attempts to match power, at every moment, generated by the one or more generators **20** with power demand exhibited by the one or more consumers **40.** In practice, such matching is not perfect, such that the aforementioned nominal operating frequency $f_0$ is not perfectly maintained, for example as expressed by Equation 1 (Eq. 1):

$$\sum \int_0^{\text{day}} \left(\text{hi\_excursion}\right)df - \sum \int_0^{\text{day}} \left(\text{lo\_excursion}\right)df \neq 0 \qquad \text{Eq. 1}$$

wherein

hi_excursion =     frequency excursions above the nominal frequency $f_0$; and
lo_excursion =     frequency excursions below the nominal frequency $f_0$.

When the electrical supply system **18** is implemented pursuant to the present disclosure, a load balancing service **50** is coupled to the electrical supply network **30,** wherein the load balancing service **50** includes one or more rechargeable accumulators, for example sealed Lead acid batteries (SLA), although types of battery such as Lithium-based batteries are alternatively employed. When the one or more consumers **40** consume more power than the one or more generators **20** can generate for a short period, the load balancing service **50** is operable to supply power derived from the one or more accumulators to the electrical supply network **30.** Moreover, in periods when the one or more generators are generating more power than required by the one or more consumers, the load balancing service is operable to recharge its one or more accumulators again.

In order to keep the one or more accumulators in a satisfactory state-of-charge (SOC), they must be neither over-charged nor deeply discharged. Overcharging causes an electrolyte within the one or more accumulators to be electrolysed to gaseous components, whereas deep discharge can cause irreversible precipitate chemical reactions within the one or more accumulators.

A charging circuit of the one or more accumulators, for example including one or more computing devices, implements decisions regarding discharging, namely to supply energy to the electrical supply network **30,** or recharging, namely to absorb energy from the electrical supply network **30,** depending upon an instantaneous frequency f of the system **18.** The instantaneous frequency f, as defined in Equation 1 (Eq. 1) should average to the nominal frequency $f_0$, but often does not in practice. Moreover, the instantaneous frequency f is potentially a noisy signal as complex types of loads at the one or more consumers **40** are switched on and off. It is thus found that controlling discharging and charging of the one or more accumulators based on the instantaneous frequency f is unreliable, and can result in premature degradation of the one or more accumulators when in operation providing an aforementioned response service.

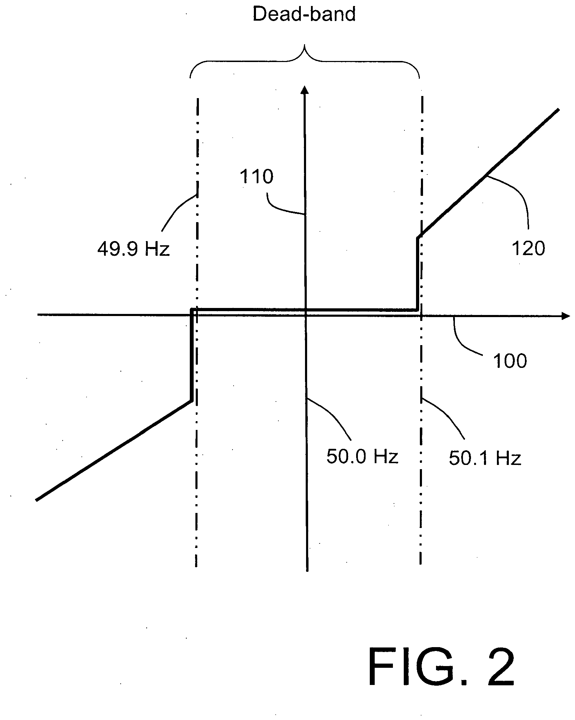

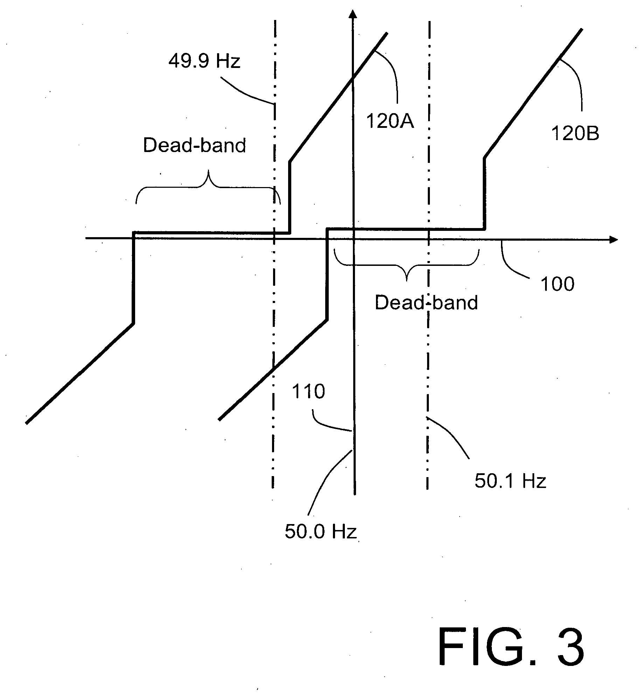

In order to address problems of unreliable discharging and charging of the one or more storage devices, for example sealed Lead acid accumulators, a hysteresis is beneficially employed in a discharge and recharging regime employed in the load balancing service **50** as illustrated in FIG. 2, wherein a dead-band corresponds to an applied hysteresis. In FIG. 2, an abscissa axis **100** denotes instantaneous grid operating frequency f, wherein 50.0 Hz corresponds to the nominal grid frequency $f_0$. An ordinate axis **110** denotes charging and discharging operations from the one or more energy storage devices. Optionally, the dead-bands for the one or more energy storage devices are randomized within the one or more energy storage devices; in other words, the one or more energy storage devices are subdivided into a plurality of groups, wherein each group is controlled to have a corresponding hysteresis and associated dead-band for charging and discharging. Beneficially, the dead-bands are randomized, for example as a function of time. For example, in FIG. 3, there are shown two mutually concurrently employed different dead-bands employed for the one or more energy storage devices providing charging and discharging responses as denoted by **120A, 120B.** The dead-bands are applied so that the one or more energy storage devices are not overcharged or excessively discharged, that the load balancing service **50** assists to maintain the instantaneous (synchronous operating) frequency f nominally at the nominal frequency $f_0$, and that noise in the instantaneous (synchronous operating) frequency f does not cause the load balancing service **50** to switch too frequently between discharging and recharging of the one or more energy storage devices, which could otherwise potentially cause excessive cycling and diminish the operating lifetime of the one or more energy storage devices, for example the aforesaid one or more sealed Lead acid accumulators.

Although reference is made to one or more accumulators in the load balancing service **50,** it will be appreciated that other types of energy storage devices can be additional or alternatively employed therein, for example inertial energy storage (vacuum flywheels), Lithium rechargeable batteries, Zinc Oxide air batteries, supercapacitors and such like.

A solution to providing the load balancing service **50** is to bias one of peak excursions experienced by the load balancing service **50,** for example a hi_excursion and/or a lo_excursion as appropriate. It is then subsequently possible to execute a "catch up" on the state-of-charge (SOC) of the one or more accumulators by biasing a peak response provided by the load balancing service **50.** Such catch-up can be implemented:

(a) as a running average (namely continuous catch-up); or
(b) by defining by way of time bands, for example 00:00 hrs to 04:00 hrs, when catch-up is implemented; or
(c) by negotiating with an operator of the electrical supply network **30,** for example National Grid (NG) regarding a new response peak frequency.

Embodiments of the present disclosure are beneficially applied to a grid-connected energy storage system which comprises a large battery constructed from thousands of individual cells together with one or more active battery management systems, connected to both a grid connected rectifier and an invertor system which provide the charging and discharging of the storage battery. A grid frequency measurement device provides instantaneous grid frequency measurements to computing hardware of the one or more active battery management systems. The one or more battery management systems provide an aggregated battery storage state-of-charge (SOC) measurement to the same computing hardware. The computing hardware is operable to control the rectifier and also to command the response power as required based on the measurements of current battery state-of-charge (SOC) and instantaneous grid frequency f.

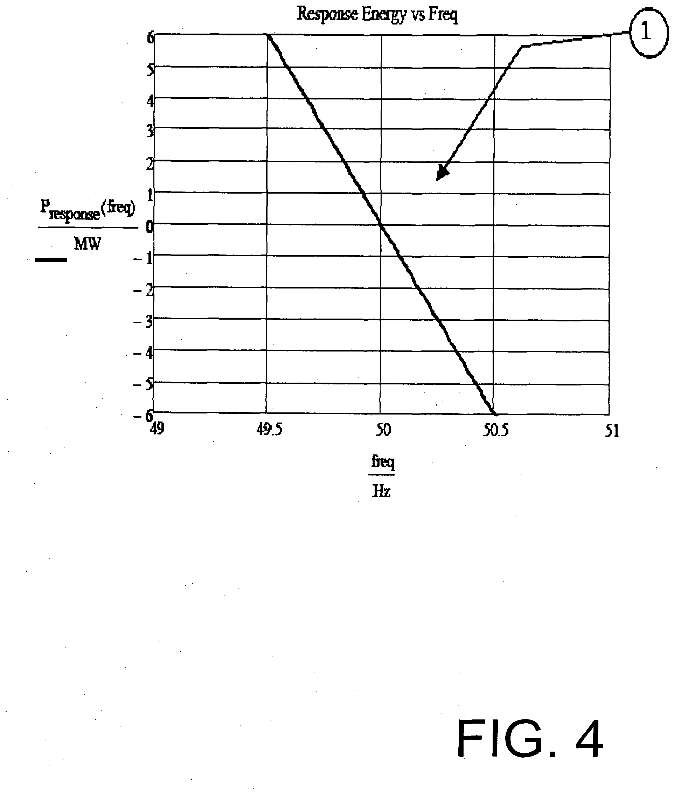

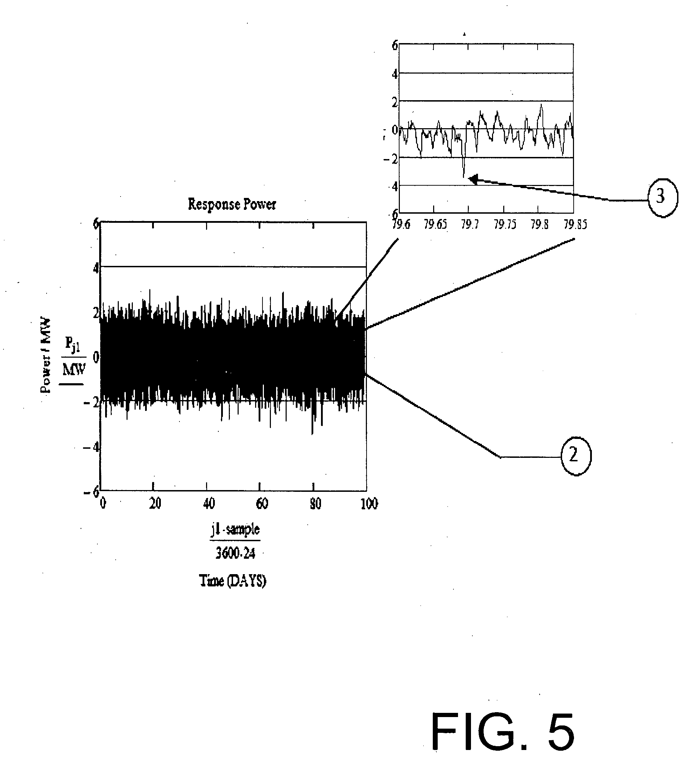

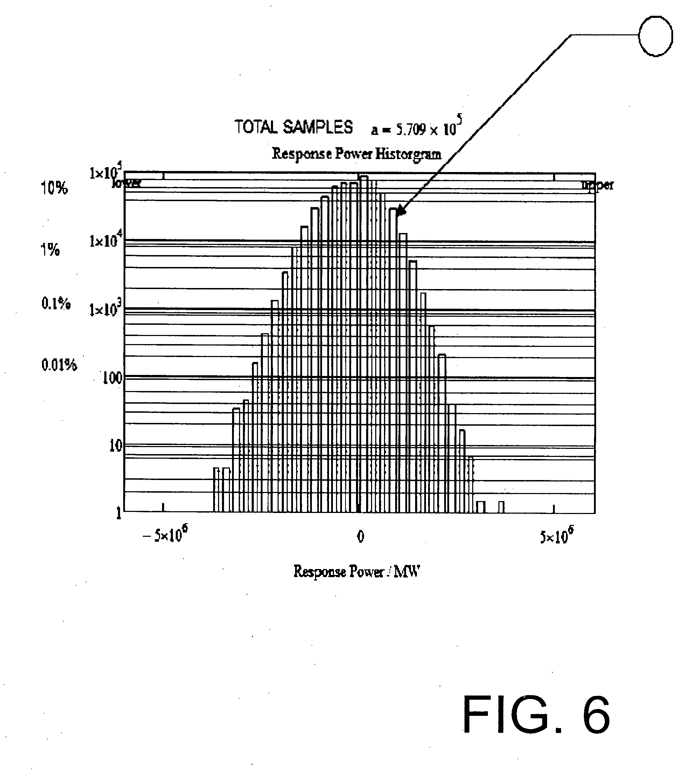

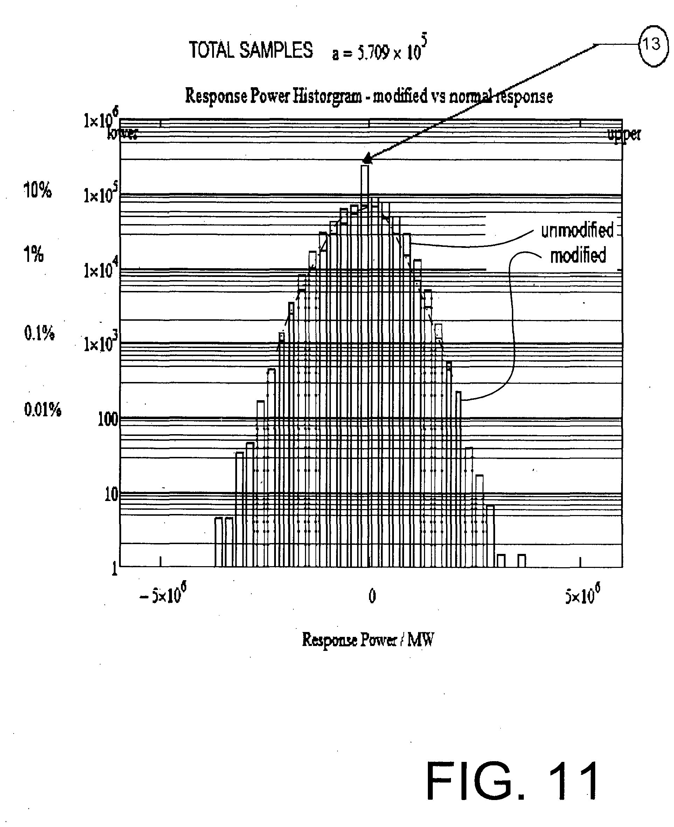

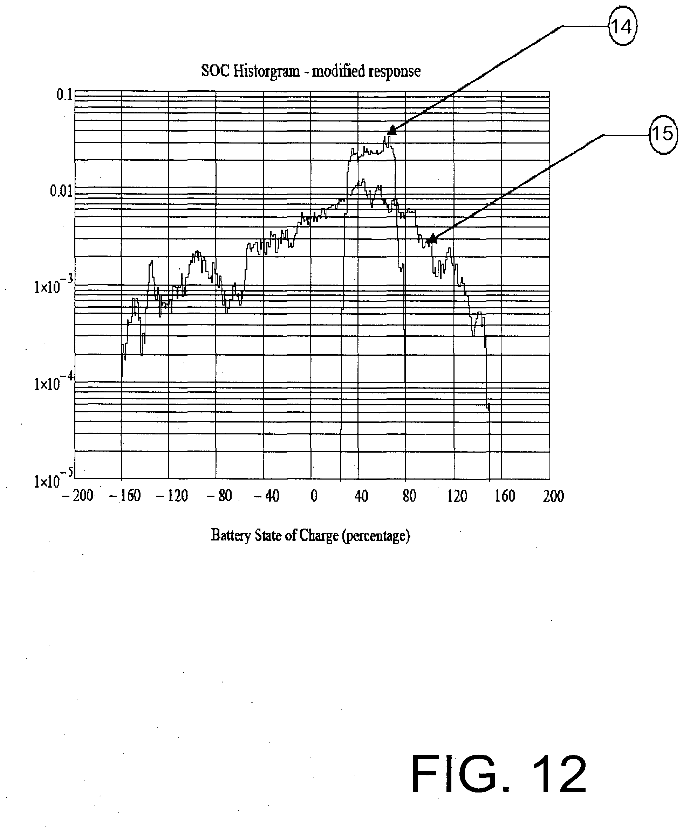

A detailed description of a method of operating the aforementioned computing hardware will now be described with reference to FIG. 4 to FIG. 12, with reference to underlying mathematical equations defining computations executed within the computing hardware.

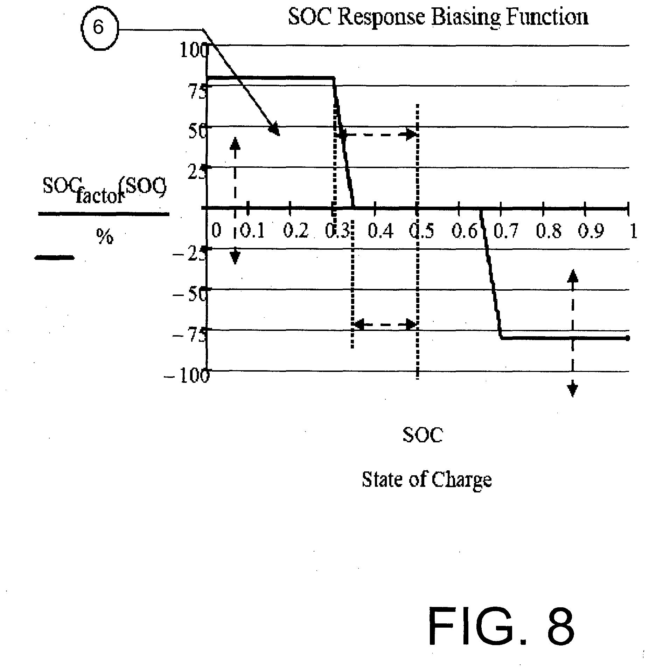

A state-of-charge (SOC) bias function is calculated from the measurement of the current battery state-of-charge (SOC). There are three defining constants which may be varied to provide differing response characteristics and these are illustrated in FIG. 8. A constant $k_1$ defines a band of states-of-charge (SOC) in which the normal generator response characteristic is applied. A constant $k_2$ defines a band over which a variable bias characteristic is applied. A constant $k_3$ defines a maximum state-of-charge (SOC) bias characteristic.

In this embodiment, a piecewise linear characteristic centred at a target nominal state of charge $SOC_{nom}$ can be defined by a relationship in Equation 2 (Eq. 2):

$$SOC_{factor}(x) := - \text{ if } [x < p_1, -k_3, \text{ if } [x < p_2, -k_4 \cdot (-x + p_2),$$
$$\text{if } [x < p_3, 0, \text{ if } [x < p_4, k_4 \cdot (x - p_3), k_3]]]] \quad \text{Eq. 2}$$

wherein inflection points are as follows:

$$p_1 := SOC_{nom} - k_2 \qquad p2 := SOC_{nom} - k_1$$

$$p_3 := SOC_{nom} + k_1 \qquad p4 := SOC_{nom} + k_2$$

The relation in Equation 2 establishes a SOC bias factor which is dependent of the measured state-of-charge (SOC).

The modified response energy versus grid frequency characteristic is computed using the measured state-of-charge (SOC) and the measured instantaneous grid frequency, f. The characteristic is again piecewise linear and possess potentially two gradients. The gradients change at two points of frequency which are symmetrically offset from the nominal frequency, $f_0$. In the UK, National Grid, namely an electric supply network operator for the UK, is required to maintain the normal grid frequency $f_0$ within a band 49.8 Hz < f < 50.2 Hz. Any excursion outside this band is regarded as abnormal operation. Such an operational characteristic allows for the computing hardware to switch the gradient in the knowledge that operation outside a defined band is abnormal and a fault condition.

The gradients are chosen so that, if the state-of-charge (SOC) is lower than desired (i.e. outside the region defined by the constant $k_1$), a modified response characteristic is selected. The characteristic **8,** is selected at 33% SOC and a maximum bias (set by the constant $k_3$) characteristic, **9** is beneficially set by SOC 30%. It will be appreciated that for SOC less than a lower range set by the constant $k_1$, the characteristic is like a normal generator, gradually transitioning as SOC deviates to more aggressive "correcting" characteristics. Moreover, it will be appreciated that, at a low state-of-charge (SOC), the modified bias characteristic cause the load balancing service **50** to output less (low frequency) discharging response within the normal operational grid frequency range, and more (high frequency) charging response. Similarly, if the state-of-charge (SOC) is higher than nominal, the corresponding opposite characteristic will cause battery state-of-charge (SOC) to return to nominal. By appropriately reducing or increasing the power in and out of the battery within the normal operation frequency band depending on the measured state of charge, the computing hardware will cause the battery state-of-charge (SOC) to return towards the nominal SOC. The symmetry of the characteristics means that the integral of the delivered response power / energy averaged over long times is equal.

In this embodiment, the delivered response power as a function of current measured state-of-charge (SOC) and instantaneous grid frequency f is defined by Equation 3 (Eq. 3):

$$P_{res2}(s, f) := \text{if } [f < (p_1), 1, \text{if } [p_2, 1 - m_2(s).(f - p_1), \text{if } [f < p_3, -m_1(s).(f - p_3),$$
$$\text{If } [f < p_4, 0, \text{if } [f < p_5, -m_1(1 - s).(f - p_4),$$
$$\text{if } [f < p_6, m_2 (1 - s).(p_6 - f) -1,-1] ] ] ] ] \qquad \text{Eq. 3}$$

wherein inflection points are defined by:

$$p_1 := \text{Full\_low} \qquad\qquad p_2 := \text{freq\_nom} - \text{Bias}$$

$$p_3 := \text{freq\_nom} - \text{deadband} \qquad p_4 := \text{freq\_nom} + \text{deadband}$$

$$p_5 := \text{freq\_nom} + \text{Bias} \qquad\qquad p_6 := \text{Full\_high}$$

and the frequency band characteristics full_low, full_high, freq_nom and bias are grid frequency characteristics. For UK operation, as aforementioned, these inflexion points are set to give inflection points as follows:

$$p_1 = 49.5 \text{ Hz} \qquad\qquad p_2 = 49.82 \text{ Hz} \qquad\qquad p_3 = 50.0 \text{ Hz}$$

$$p_4 = 50.0 \text{ Hz} \qquad\qquad p_5 = 50.18 \text{ Hz} \qquad\qquad p_6 = 50.5 \text{ Hz}$$

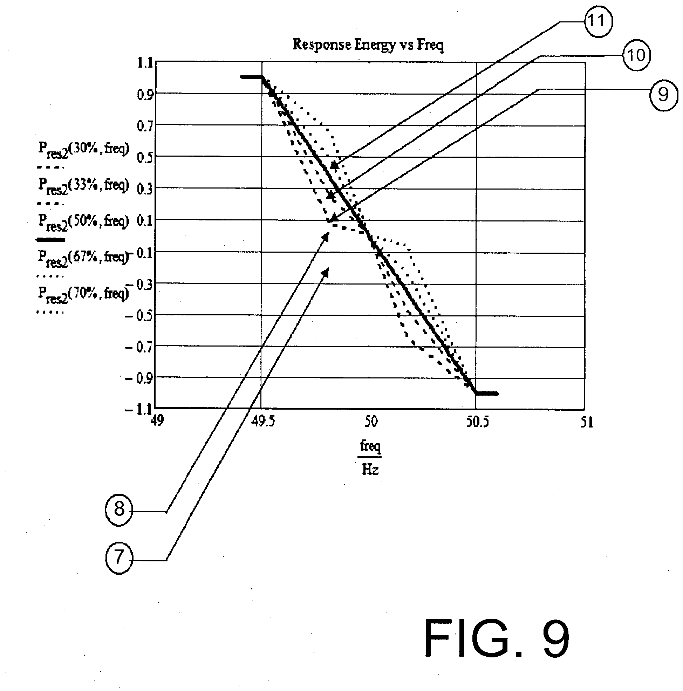

An optional dead-band, not shown in FIG. 9, is inherent in the Equation 3 (Eq. 3) defined above. This dead-band defines a region where zero response power is delivered, and is one method of avoiding the whole response service **50** switching from charge to discharge rapidly and continuously, if the grid frequency and measurement error were to remain around 50.000Hz. Alternatively, hysteresis is optionally employed.

In operation of the system, the constants $k_1$, $k_2$ and $k_3$ are set to maintain the state-of-charge (SOC) within a defined and restricted band around the nominal SOC. This provides energy headroom to provide response to energy grid faults which have defined and known characteristics. In the UK, a power grid system operator is required to plan for single fault tolerance, which, for low frequency events, is the loss of the largest generation station (for example, Sizewell nuclear power plant (UK) at the time of submitting the present disclosure) and this potentially causes a grid frequency excursion to around 49.2 Hz to occur within 10 seconds. If low frequency response energy supplied to the electrical power network **30,** namely grid, does not restore net energy balance between consuming loads and generation, then grid frequency f continues to reduce over a few more seconds, until mandatory load shedding blacks out defined subsets of consumers **40**, reducing load and restoring energy balancing. Similarly, the worst high frequency events cause grid frequency f to rise, requiring battery energy storage systems to consume and charge their battery.

The aforesaid computing hardware beneficially has a plurality of desirable features as illustrated and described.

Firstly, the state-of-charge (SOC) is managed to a tighter band, reducing the required battery size, irrespective of a previous history of the grid frequency f. The inherent SOC is related to an integral of grid frequency relationship is broken. The long term average of the response power delivered is identical to that of the generator. Moreover, the long term average frequency versus response power characteristic is maintained. Full response power is always delivered during worst case events. Assuming a given system operator were to manage the grid synchronous time clock error within a defined band, then the constant $k_1$ constant and battery can be adjusted to provide an unbiased normal response as would be expected from a generator.

Furthermore, the system described in the foregoing is linear and deterministic, and does not depend on averaging the grid frequency f or using the history of grid frequency f, or using populations of devices. The system is beneficially modelled by conventional feedback linear systems, for example for verifying its operating reliability in adverse grid conditions.

The nominal state-of-charge, and the operating band for state-of-charges are optionally deliberately chosen to operate in regions advantageous for the battery storage chemistry of the energy storage device by appropriate selection of the defining characteristics, as aforementioned.

While the embodiment described above uses a piecewise linear function to define the state-of-charge biasing function and the modified response power characteristic, it is possible to use almost any mathematical function that has the important characteristics identified that allows for a correcting bias to be applied in the normal grid operating frequency range, while allowing for full response power delivery. Moreover, by alleviating the requirement for equal power delivery across defined frequency ranges, less desirable but workable characteristics may be obtained.

Similarly non-symmetric corrections to the biasing algorithms are optionally applied to correct for unequal losses in the charging / discharging circuits which may also cause SOC bias, although the aforementioned described system will correct for these automatically. Moreover, the state-of-charge management characteristics are optionally applied to individual sub-units within the battery storage. This beneficially allows for portions of the battery to be run into defined state of charges for managing battery / cell balancing.

While the described embodiments are highly advantageous to battery energy storage providing frequency response, it can equally apply to any energy storage device, whether it is based upon hydroelectric energy storage, compressed air energy storage, liquefied air energy storage, mechanical flywheel energy storage, supercapacitor energy storage, populations of load devices or others known in the art.

Within a group of batteries employed for implementing the response service, as described above, the batteries are optionally operated in mutually different states of discharge, within high and low charge state limits. Alternatively, the batteries are optionally operated in mutually similar states of discharge, within high and low charge state limits. Optionally, battery technologies employed includes Lithium Titanate batteries and/or Barium Titanate batteries, which are well suited for immediate, namely high CV, powers over short periods of time, but with long operating life, for example employed in combination for Lead acid batteries (for example SLA-type sealed Lead acid gel batteries).

Other embodiments of the disclosure will now be described.

A state-of-charge bias function is introduced, defined by Equation 4 (Eq. 4):

$$SOC_{factor}(x) := -if\ [x < p_1, -k_3, if\ [x < p_2, -k_4 \cdot (-x + p_2),$$

$$If\ [x < p_3, 0, if\ [x < p_4, k_4 \cdot (x - p_3), k_3\ ]\ ]\ ]\ ] \qquad Eq.\ 4$$

wherein x is the state-of-charge (SOC), and a constant $k_1$ defines a deadband about which no correction is applied and response is normal, a constant $k_2$ defines an upper limit at which SOC factor is capped, and a constant $k_3$ is the cap on modification factor, for example:

$$k_1 := 5\% \qquad k_2 := 15\% \qquad k_3 := 20\% \qquad SOC_{nom} := 50\%$$

$$\dots constants\ defining\ function$$

$$k_4 := k_3 / (k_1 - k_2)$$

$$\dots various\ points\ in\ a\ response\ function$$

$$p_1 := SOC_{nom} - k_2 \qquad p_2 := SOC_{nom} - k_1 \qquad p_3 := SOC_{nom} + k_1$$

$$p_4 := SOC_{nom} + k_2$$

The SOC factor is a function varying from $+k_3$ to $-k_3$, depending upon the battery state-of-charge (SOC).
The SOC factor is used to modify the response characteristic, wherein the response characteristics is a piecewise linear function with five regions and is defined by Equation 5 (Eq. 5):

$$P_{res2}(s, f) := \text{if } [f < (p_1), 1, \text{if } [f < p_2, 1 - m2(s).(f - p_1), \text{if } [f < p_3, -m_1(s).(f - p_3), \text{if } [f < p_4, 0,$$
$$\text{if } [f < p_5, -m_1(s).(f - p_4), \text{if } [f < p_6, m_2(s).(p_6 - f) -1, -1]]]]]] \qquad \text{Eq. 5}$$

wherein inflexion points are as follows:

$$p_1 := \text{Full-low} \qquad p_2 := \text{freq\_nom} - \text{Bias} \qquad p_3 := \text{freq-nom} - \text{deadband}$$

$$p_4 := \text{freq\_nom} + \text{deadband} \qquad\qquad p_5 := \text{freq\_nom} + \text{Bias}$$

$$p_6 := \text{Full\_high}$$

namely, for example,

$$p_1 = 49.5 \text{ Hz} \qquad p_2 = 49.82 \text{ Hz} \qquad p_3 = 49.98 \text{ Hz}$$

$$p_4 = 50.02 \text{ Hz} \qquad p_5 = 50.18 \text{ Hz} \qquad p_6 = 50.5 \text{ Hz}$$

$$P_f := \text{Full\_power}$$

and points and gradients defining modified response function are such that:

a gradient of the first portion is defined by Equation 6 (Eq. 6):

$$m_1(SOC) = \frac{\text{HiNom}(1 - SOC_{factor}(SOC))}{(\text{HiBias} - \text{freq\_nom} - \text{deadband})} \qquad \text{Eq. 6}$$

wherein the SOC factor is used to modify the response characteristics, and a gradient of second portion is defined by Equation 7 (Eq. 7):

$$m_2(SOC) = \frac{1 - \text{HiNom}(1 - SOC_{factor}(SOC))}{\text{Full\_hugh} - \text{HiBias}} \qquad \text{Eq. 7}$$

An alternative method optionally modifies the response by applying the correction to grid frequency measurement, wherein response and grid frequency deviation from nominal are both linear and proportional.
Alternatively, a filter is optionally applied to grid frequency or response, which effectively reduces the low frequency time varying components of grid frequency, analogous to an a.c. coupling technique which avoids the state-of-charge (SOC) continuously heading low over a period of time.

The state-of-charge (SOC) is directly related to synchronous clock error, namely the time measured on a clock driven from mains frequency will measure the integral of grid frequency, which is time. Most grid operators will target a maximum time error, as clocks do sometimes use mains for keeping time, but increasingly this requirement is being relaxed. In the UK, real grid data presented in FIG. 4 to FIG. 12 set the peak time error to be around 20 seconds.

Alternatively, differentiation-type functions applied to the frequency history, are a form of filter which has zero response to DC and linear increasing responses to faster fluctuations, and is beneficially employed in embodiments of the disclosure described in the foregoing.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

## Claims

1. An apparatus for correcting net energy when providing a load balancing service (50) to an electrical power supply network (30), wherein the load balancing service (50) includes one or more energy storage devices which are charged and/or discharged from energy supplied from and/or to the electrical power supply network (30) respectively, **characterised in that** the apparatus associated with the one or more energy storage devices is operable to apply a bias in the form of a modified response energy versus frequency characteristic to high-excursions and/or low-excursions of the load balancing service (50) to control a state-of-charge (SOC) of the one or more energy storage devices, wherein the bias is a function of an operating frequency (f) of the electrical power supply network (30) and the state-of-charge (SOC) of the one or more energy storage devices, for ensuring that the one or more energy storage devices are maintained at a nominal charge ($S_{nom}$).

2. An apparatus as claimed in claim 1, **characterized in that** the apparatus, for ensuring that the one or more energy storage devices are maintained at a nominal charge ($S_{nom}$), operates in regions that are advantageous to a battery storage device chemistry of the one or more energy storage devices.

3. An apparatus as claimed in claim 1 or 2, **characterized in that** the energy storage devices include at least one of: sealed Lead acid batteries, lithium-based batteries, inertial flywheel energy storage devices, supercapacitors, air batteries.

4. An apparatus as claimed in claim 1, 2 or 3, **characterized in that** the load balancing service (50) provides a response (7 to 11) that is modified as a function of the measured state-of-charge (SOC).

5. An apparatus as claimed in claim 4, **characterized in that** the response (7 to 11) is a piecewise linear function of the operating frequency (f) of the electrical power supply network (30).

6. An apparatus as claimed in claim 5, **characterized in that** the allowable operating region in frequency response (7 to 11) wherein the bias can extend is defined as piecewise linear functions of the operating frequency (f) of the electrical power supply network (30).

7. An apparatus as claimed in any one of claims 1 to 6, **characterized in that** a value of maximum high and low excursion bias to the response is specified.

8. A method of using an apparatus for correcting net energy when providing a load balancing service (50) to an electrical power supply network (30), wherein the load balancing service (50) includes one or more energy storage devices which are charged and/or discharged from energy supplied from and/or to the electrical power supply network (30) respectively, **characterized in that** the method includes operating the apparatus associated with the one or more energy storage devices to apply a bias in the form a a modified response energy versus frequency characteristic to high-excursions and/or low-excursions of the load balancing service (50) to control a state-of-charge (SOC) of the one or more energy storage devices, wherein the bias is a function of an operating frequency of the electrical power supply network (30) and the state-of-charge (SOC) of the one or more energy storage devices, for ensuring that the one or more energy storage devices are maintained at nominal charge ($S_{nom}$).

9. A method as claimed in claim 8, **characterized in that** the method includes, for ensuring that the one or more energy storage devices are maintained at nominal charge ($S_{nom}$), operating in regions that are advantageous to a battery storage device chemistry of the one or more energy storage devices.

10. A method as claimed in claim 8 or 9, **characterized in that** the method includes arranging for the one or more energy storage devices to include at least one of: sealed Lead acid batteries, lithium-based batteries, inertial flywheel energy storage devices, supercapacitors, air batteries.

11. A method as claimed in claim 8, 9 or 10, **characterized in that** the method includes arranging for the load balancing service (50) to provide a response (7 to 11) that is modified as a function of the measured state-of-charge (SOC).

12. A method as claimed in claim 11, **characterized in that** the allowable operating region in frequency response (7 to 11) wherein the bias can extend is defined as piecewise linear functions of the operating frequency (f) of the electrical power supply network (30).

13. A method as claimed in any one of claims 8 to 12, **characterized in that** the method includes operating the load balancing service (50) to exhibit a deadband in its response around a nominal operating frequency (f) of the electrical power supply network (30).

14. A method as claimed in any one of claims 8 to 13, **characterized in that** the method includes specifying a value of maximum high and low excursion bias to the response.

15. A software product recording on machine-readable data storage media, **characterized in that** the software product is executable upon computing hardware for implementing a method as claimed in claim 8.

16. An electrical power supply network (30) including an apparatus as claimed in any one of claims 1 to 7, for providing in operation a response service to the electrical power supply network (30).


**Patentansprüche**

1. Vorrichtung zum Korrigieren einer Nettoenergie, wenn ein Lastausgleichsdienst (50) für ein elektrisches Energieversorgungsnetz (30) bereitgestellt wird, wobei der Lastausgleichsdienst (50) eine oder mehrere Energiespeichereinrichtungen umfasst, welche mit Energie, die aus dem und/oder in das elektrische Energieversorgungsnetz (30) zugeführt wird, jeweils geladen und/oder entladen werden, **dadurch gekennzeichnet, dass** die Vorrichtung, die der einen oder den mehreren Energiespeichereinrichtungen zugeordnet ist, betriebsfähig ist, einen Vorhalt in der Form einer modifizierten Antwort-Energie-über-Frequenz-Charakteristik auf hohe Abweichungen und/oder niedrige Abweichungen des Lastausgleichsdiensts (50) anzuwenden, um einen Ladezustand (SOC) der einen oder der mehreren Energiespeichereinrichtungen zu steuern, wobei der Vorhalt eine Funktion einer Betriebsfrequenz (f) des elektrischen Energieversorgungsnetzes (30) und des Ladezustands (SOC) der einen oder der mehreren Energiespeichereinrichtungen ist, um sicherzustellen, dass die eine oder die mehreren Energiespeichereinrichtungen auf einer Nominalladung ($S_{nom}$) gehalten werden.

2. Vorrichtung nach Anspruch 1, **dadurch gekennzeichnet, dass** die Vorrichtung, um sicherzustellen, dass die eine oder die mehreren Energiespeichereinrichtungen auf einer Nominalladung ($S_{nom}$) gehalten werden, in Bereichen arbeitet, welche für eine Batteriespeichereinrichtung-Chemie der einen oder der mehreren Energiespeichereinrichtungen vorteilhaft ist.

3. Vorrichtung nach Anspruch 1 oder 2, **dadurch gekennzeichnet, dass** die Energiespeichereinrichtungen mindestens eines von folgenden umfassen: versiegelte Bleisäurebatterien, Lithium-basierte Batterien, Energiespeichereinrichtungen mit Schwungrad, Superkondensatoren, Luftbatterien.

4. Vorrichtung nach Anspruch 1, 2 oder 3, **dadurch gekennzeichnet, dass** der Lastausgleichsdienst (50) eine Antwort (7 bis 11) bereitstellt, welche als eine Funktion des gemessenen Ladezustands (SOC) modifiziert ist.

5. Vorrichtung nach Anspruch 4, **dadurch gekennzeichnet, dass** die Antwort (7 bis 11) eine stückweise lineare Funktion der Betriebsfrequenz (f) des elektrischen Energieversorgungsnetzes (30) ist.

**6.** Vorrichtung nach Anspruch 5, **dadurch gekennzeichnet, dass** der zulässige Betriebsbereich in der Frequenzantwort (7 bis 11), worin sich der Vorhalt erstrecken kann, als stückweise lineare Funktionen der Betriebsfrequenz (f) des elektrischen Energieversorgungsnetzes (30) definiert ist.

**7.** Vorrichtung nach einem der Ansprüche 1 bis 6, **dadurch gekennzeichnet, dass** ein Wert eines maximalen hohen und niedrigen Ausgleichsvorhalts auf die Antwort spezifiziert ist.

**8.** Verfahren zur Verwendung einer Vorrichtung zum Korrigieren einer Nettoenergie, wenn ein Lastausgleichsdienst (50) für ein elektrisches Energieversorgungsnetz (30) bereitgestellt wird, wobei der Lastausgleichsdienst (50) eine oder mehrere Energiespeichereinrichtungen umfasst, welche mit Energie, die aus dem und/oder in das elektrische Energieversorgungsnetz (30) zugeführt wird, jeweils geladen und/oder entladen werden, **dadurch gekennzeichnet, dass** das Verfahren ein Betreiben der Vorrichtung umfasst, die der einen oder den mehreren Energiespeichereinrichtungen zugeordnet ist, um einen Vorhalt in der Form einer modifizierten Antwort-Energie-über-Frequenz-Charakteristik auf hohe Abweichungen und/oder niedrige Abweichungen des Lastausgleichsdiensts (50) anzuwenden, um einen Ladezustand (SOC) der einen oder der mehreren Energiespeichereinrichtungen zu steuern, wobei der Vorhalt eine Funktion einer Betriebsfrequenz des elektrischen Energieversorgungsnetzes (30) und des Ladezustands (SOC) der einen oder der mehreren Energiespeichereinrichtungen ist, um sicherzustellen, dass die eine oder die mehreren Energiespeichereinrichtungen auf einer Nominalladung ($S_{nom}$) gehalten werden.

**9.** Verfahren nach Anspruch 8, **dadurch gekennzeichnet, dass** das Verfahren, um sicherzustellen, dass die eine oder die mehreren Energiespeichereinrichtungen auf einer Nominalladung ($S_{nom}$) gehalten werden, ein Arbeiten in Bereichen umfasst, welche für eine Batteriespeichereinrichtung-Chemie der einen oder der mehreren Energiespeichereinrichtungen vorteilhaft sind.

**10.** Verfahren nach Anspruch 8 oder 9, **dadurch gekennzeichnet, dass** das Verfahren ein derartiges Auslegen der einen oder der mehreren Energiespeichereinrichtungen umfasst, dass sie mindestens eines von folgenden umfassen: versiegelte Bleisäurebatterien, Lithium-basierte Batterien, Energiespeichereinrichtungen mit Schwungrad, Superkondensatoren, Luftbatterien.

**11.** Verfahren nach Anspruch 8, 9 oder 10, **dadurch gekennzeichnet, dass** das Verfahren ein derartiges Auslegen des Lastausgleichsdiensts (50) umfasst, dass er eine Antwort (7 bis 11) bereitstellt, welche als eine Funktion des gemessenen Ladezustands (SOC) modifiziert ist.

**12.** Verfahren nach Anspruch 11, **dadurch gekennzeichnet, dass** der zulässige Betriebsbereich in der Frequenzantwort (7 bis 11), worin sich der Vorhalt erstrecken kann, als stückweise lineare Funktionen der Betriebsfrequenz (f) des elektrischen Energieversorgungsnetzes (30) definiert wird.

**13.** Verfahren nach einem der Ansprüche 8 bis 12, **dadurch gekennzeichnet, dass** das Verfahren ein Betreiben des Lastausgleichsdiensts (50) umfasst, um eine Totzone in seiner Antwort um eine nominale Betriebsfrequenz (f) des elektrischen Energieversorgungsnetzes (30) aufzuzeigen.

**14.** Verfahren nach einem der Ansprüche 8 bis 13, **dadurch gekennzeichnet, dass** das Verfahren ein Spezifizieren eines Werts eines maximalen hohen und niedrigen Ausgleichsvorhalts auf die Antwort umfasst.

**15.** Softwareprodukt, gespeichert auf maschinenlesbaren Datenspeichermedien, **dadurch gekennzeichnet, dass** das Softwareprodukt auf einer Computer-Hardware zum Implementieren eines Verfahrens nach Anspruch 8 ausführbar ist.

**16.** Elektrisches Energieversorgungsnetz (30), umfassend eine Vorrichtung nach einem der Ansprüche 1 bis 7, zum Bereitstellen, bei Betrieb, eines Antwortdienstes für das elektrische Energieversorgungsnetz (30).


**Revendications**

**1.** Appareil destiné à corriger l'énergie d'un réseau lors de la fourniture d'un service (50) d'équilibrage des charges à un réseau d'alimentation électrique (30), dans lequel le service (50) d'équilibrage des charges comprend un ou plusieurs dispositifs de stockage d'énergie, qui sont chargés et/ou déchargés, respectivement à partir de l'énergie fournie par le réseau d'alimentation électrique (30) et/ou vers ce dernier, **caractérisé en ce que** l'appareil associé au ou aux dispositifs de stockage d'énergie peut fonctionner en appliquant un biais, sous la forme d'une caractéristique modifiée de l'énergie de réponse en fonction de la fréquence de réponse, à de fortes excursions et/ou de faibles excursions du service (50) d'équilibrage des charges, pour réguler un état de charge (SOC) du ou des dispositifs de stockage d'énergie, le biais étant une fonction de la fréquence de fonctionnement (f) du réseau d'alimentation électrique (30) et de l'état de charge (SOC) du ou des dispositifs de stockage d'énergie, pour garantir que le ou les dispositifs de stockage d'énergie sont maintenus à une charge nominale ($S_{nom}$).

2. Appareil selon la revendication 1, **caractérisé en ce que** l'appareil, pour garantir que le ou les dispositifs de stockage d'énergie sont maintenus à une charge nominale ($S_{nom}$), fonctionne dans des régions qui sont avantageuses pour la chimie d'un dispositif de stockage de type batterie du ou des dispositifs de stockage d'énergie.

3. Appareil selon la revendication 1 ou 2, **caractérisé en ce que** les dispositifs de stockage d'énergie comprennent au moins l'un de batteries acide-plomb scellées, de batteries à base de lithium, de dispositifs de stockage d'énergie à volant d'inertie, de supercondensateurs, de batteries à air.

4. Appareil selon la revendication 1, 2 ou 3, **caractérisé en ce que** le service (50) d'équilibrage des charges fournit une réponse (7 à 11) qui est modifiée en fonction de l'état de charge (SOC) mesuré.

5. Appareil selon la revendication 4, **caractérisé en ce que** la réponse (7 à 11) est une fonction linéaire par morceaux de la fréquence de fonctionnement (f) du réseau d'alimentation électrique (30).

6. Appareil selon la revendication 5, **caractérisé en ce que** la région de fonctionnement admissible de la réponse en fréquence (7 à 11), dans laquelle le biais peut s'étendre, est définie par des fonctions linéaires par morceaux de la fréquence de fonctionnement (f) du réseau d'alimentation électrique (30).

7. Appareil selon l'une quelconque des revendications 1 à 6, **caractérisé en ce qu'**une valeur du biais maximal, pour ce qui est de la forte excursion et de la faible excursion, à la réponse est spécifiée.

8. Procédé pour l'utilisation d'un appareil destiné à corriger l'énergie d'un réseau lors de la fourniture d'un service (50) d'équilibrage des charges à un réseau d'alimentation électrique (30), dans lequel le service (50) d'équilibrage des charges comprend un ou plusieurs dispositifs de stockage d'énergie, qui sont chargés et/ou déchargés, respectivement à partir de l'énergie fournie par le réseau d'alimentation électrique (30) et/ou vers ce dernier, **caractérisé en ce que** le procédé comprend le fonctionnement de l'appareil associé au ou aux dispositifs de stockage d'énergie peut fonctionner en appliquant un biais, sous la forme d'une caractéristique modifiée de l'énergie de réponse en fonction de la fréquence de réponse, à de fortes excursions et/ou de faibles excursions du service (50) d'équilibrage des charges, pour réguler un état de charge (SOC) du ou des dispositifs de stockage d'énergie, le biais étant une fonction de la fréquence de fonctionnement (f) du réseau d'alimentation électrique (30) et de l'état de charge (SOC) du ou des dispositifs de stockage d'énergie, pour garantir que le ou les dispositifs de stockage d'énergie sont maintenus à une charge nominale ($S_{nom}$).

9. Procédé selon la revendication 8, **caractérisé en ce que** l'appareil, pour garantir que le ou les dispositifs de stockage d'énergie sont maintenus à une charge nominale ($S_{nom}$), fonctionnant dans des régions qui sont avantageuses pour la chimie d'un dispositif de stockage de type batterie du ou des dispositifs de stockage d'énergie.

10. Procédé selon la revendication 8 ou 9, **caractérisé en ce que** le procédé comprend l'arrangement du ou des dispositifs de stockage d'énergie de façon qu'ils comprennent au moins l'un de batteries acide-plomb scellées, de batteries à base de lithium, de dispositifs de stockage d'énergie à volant d'inertie, de supercondensateurs, de batteries à air.

11. Procédé selon la revendication 8, 9 ou 10, **caractérisé en ce que** le procédé comprend l'arrangement du service (50) d'équilibrage des charges de façon à fournir une réponse (7 à 11) qui est modifiée en fonction de l'état de charge (SOC) mesuré.

12. Procédé selon la revendication 11, **caractérisé en ce que** la région de fonctionnement admissible de la réponse en fréquence (7 à 11), dans laquelle le biais peut s'étendre, est définie par des fonctions linéaires par morceaux de la fréquence de fonctionnement (f) du réseau d'alimentation électrique (30).

13. Procédé selon l'une quelconque des revendications 8 à 12, **caractérisé en ce que** le procédé comprend l'utilisation du service (50) d'équilibrage des charges de façon que sa réponse présente une zone morte autour d'une fréquence de fonctionnement nominale (f) du réseau d'alimentation électrique (30).

14. Procédé selon l'une quelconque des revendications 8 à 13, **caractérisé en ce que** le procédé comprend la spécification d'une valeur du biais maximal, pour ce qui est de la forte excursion et de la faible excursion, à la réponse.

15. Produit logiciel enregistrant sur des supports de stockage de données lisibles par un ordinateur, **caractérisé en ce que** le produit logiciel est exécutable sur un matériel informatique permettant la mise en oeuvre d'un procédé selon la revendication 8.

16. Réseau d'alimentation électrique (30) comprenant un appareil selon l'une quelconque des revendications 1 à 9, destiné à fournir en cours de fonctionnement un service de réponse à un réseau d'alimentation électrique.

FIG. 1

Dead-band

49.9 Hz

110

120

50.0 Hz

50.1 Hz

100

# FIG. 2

FIG. 3

FIG. 4

FIG. 5

FIG. 6

FIG. 7

FIG. 8

Response Energy vs Freq

FIG. 9

FIG. 10

FIG. 11

FIG. 12